# EUROPÄISCHE PATENTSCHRIFT

(11) **EP 2 842 785 B1**
(45) Veröffentlichungstag und Bekanntmachung des Hinweises auf die Patenterteilung: **03.02.2016**
(21) Anmeldenummer: 13182105.0
(22) Anmeldetag: 28.08.2013
(51) Int. Cl.: B60K 15/077, B60K 15/03

(54) **Nutzfahrzeugtank**
Commercial vehicle tank
Réservoir de véhicule utilitaire

(43) Veröffentlichungstag der Anmeldung: 04.03.2015
(73) Patentinhaber: Magna Steyr Fuel Systems GesmbH, 8261 Sinabelkirchen (AT)
(72) Erfinder: Gross, Jörg, 50389 Wessling (DE); Kahler, Bernd, 8020 Graz (AT); Schmid, Michael, 8020 Graz (AT)
(74) Vertreter: Rausch, Gabriele

(56) Entgegenhaltungen:
- WO-A1-2004/009391
- WO-A2-2010/108199
- WO-A2-2011/045007
- DE-A1- 10 055 660
- DE-A1- 10 214 037
- FR-A1- 2 796 340

## Beschreibung

Die Erfindung geht aus von einem Fahrzeugtank bestehend aus einem Behälter mit einem durchgehenden Volumen und mindestens zwei Schwallwänden die sich senkrecht zur Längsachse des Behälters erstrecken, wobei die Schwallwände mit den Wänden des Behälters einen Schwalltopf bilden, indem sie direkt dicht mit dem Behälter verbunden sind.

### Stand der Technik

Ist ein Tank nicht vollständig mit einer Flüssigkeit, beispielsweise Wasser, gefüllt und wird bewegt, so kann es in seinem Inneren zu Schwappbewegungen der Flüssigkeit gegen die Tankwand kommen. In ungünstigen Situationen wird bei diesen Schwappbewegungen auch eine gewisse Luftmenge eingeschlossen, was deutlich hörbare Schläge verursachen kann. Die genannten Geräusche können bei allen Arten bewegter flüssigkeitsgefüllter Tanks entstehen, so beispielsweise bei Kraftstoffbehältern von Kraftfahrzeugen. Das genannte Geräuschverhalten kann hierbei je nach zu tankendem Kraftstofftyp unterschiedlich stark ausgeprägt sein.

Kraftstoffbehälter werden beispielsweise aus zwei Blechschalen mit einer Oberschale und einer Unterschale hergestellt. In die Unterschale können weitere Komponenten wie beispielsweise ein Schwalltopf, sowie Labyrinthwände zur Herabsetzung der Strömungsgeschwindigkeit des Kraftstoffs im Ansaugbereich der Kraftstoffpumpe montiert werden. Anschließend werden Ober- und Unterschale miteinander verschweißt.

Ein Problem stellt die vollständige Entleerung des Kraftstofftanks dar. Aufgrund der großen Dimensionen der Kraftstofftanks für Nutzfahrzeuge bleiben erhebliche Mengen an Kraftstoff im Tank, die nicht mehr abgesaugt werden können oder in bestimmten Fahrsituationen nicht mehr abgesaugt werden können. Weiterhin ist es notwendig, für die Betankung eines Nutzfahrzeuges eine große Menge an Kraftstoff in den Kraftstofftank zu füllen, um ein zuverlässiges Starten des Motors zu gewährleisten. Dies gilt insbesondere im Fall der erstmaligen Betankung des Nutzfahrzeuges beim Hersteller. Ein weiteres Problem stellt die Verschmutzung des Kraftstoffes dar, der einer Absaugung des Kraftstoffes bis auf minimale restmengen im Wege steht.

Aus der WO 2008105725 ist eine Kraftstofftankanordnung für ein Fahrzeug bekannt, mit einem Kraftstofftank in einen Haupttank und einen Auffangtankraum, wobei der Haupttank und den Auffangtankraum durch wenigstens einen Trennwand voneinander getrennt sind. Um eine zuverlässige Kraftstoffzufuhr zum Verbrennungsmotor zu gewährleisten, existiert ein Ventilmechanismus innerhalb der Trennwand, der in Abhängigkeit von einem Füllzustand innerhalb des Haupttanks, in Reaktion auf Ansaugen von Brennstoff über die Brennstoffzuleitung geöffnet oder geschlossen wird.

Weiterhin ist aus der FR2679840 ein Kraftstofftank bekannt, in dem ein Einsatz vorgesehen ist, der je nach Straßenlage des Fahrzeugs befüllt wird. Die Ansaugleitung entnimmt Kraftstoff aus dem Einsatz für den Motor. Diese Lösung ermöglicht die Einführung von Kraftstoff in den unterschiedlichen Fahrsituationen löst aber das Problem der erstmaligen Betankung nicht.

Ein Fahrzeugtank mit den Merkmalen des Oberbegriffs des Anspruchs 1 ist aus der WO 2004/009391 A1 bekannt.

Es ist daher Aufgabe der Erfindung einen Fahrzeugtank zur Verfügung zu stellen, der eine reduzierte Erstbetankungsmenge und eine optimierte Ansaugung von Kraftstoff bei reduzierter Restmenge im Tank unter Berücksichtigung einer Verschmutzung erlaubt.

Die Aufgabe wird gelöst mit einem Fahrzeugtank bestehend mit den Merkmalen des Anspruchs 1.

Durch die vorgeschlagene Lösung ist eine Reduzierung der Erstbetankungsmenge beim Fahrzeughersteller möglich. Weiterhin wird durch die Reduzierung der nicht abgesaugten Restmenge im Fahrzeugtank eine Erhöhung der Reichweite pro Tankfüllung erzielt oder alternativ das Tankvolumen und somit die Reduktion des Fahrzeuggewichtes bei gleicher Reichweite erreicht, ohne dass Verstopfungen durch Verschmutzung des Kraftstoffes entstehen.

Vorteilhafterweise ist der im Behälter gebildete Schwalltopf mittig im Behälter des Fahrzeugtanks gebildet.

Durch den mittigen Einbau des Schwalltopfes ist es möglich, beide Seiten des Fahrzeugtanks gleichmäßig zu entleeren.

Vorteilhafterweise ist die Ansaugleitung, die in den Schwalltopf reicht, nahe am Einfüllrohr angebracht. Durch die Positionierung der Ansaugleitung nahe am Einfüllrohr ist eine vorteilhafte Geometrie gegeben, mit der der Schwalltopf gefüllt und entleert werden kann.

Besonders vorteilhaft ist es, dass die Ansaugleitung am Einfüllrohr oder direkt an einer Schwallwand angebracht ist. Durch die bauliche Integration der beiden Komponenten ist eine deutliche Vereinfachung des Fahrzeugtanks zu erzielen.

Eine vorteilhafte Ausführungsform ist es, dass die Ventile federbelastete Rückschlagventile sind.

Es ist dabei von Vorteil, dass die Rückschlagventile möglichst nahe am Behältergrund und Schwalltopfgrund angebracht sind. Durch diese Maßnahme ist es möglich die Restmenge des Kraftstoffes aufzusaugen.

Erfindungsgemäss werden Verunreinigungen über eine Entleerung aus dem Tank entfernt.

### Beschreibung der Erfindung

Die Erfindung wird nachfolgend beispielhaft unter Bezugnahme auf die beigefügte Zeichnung beschrieben.

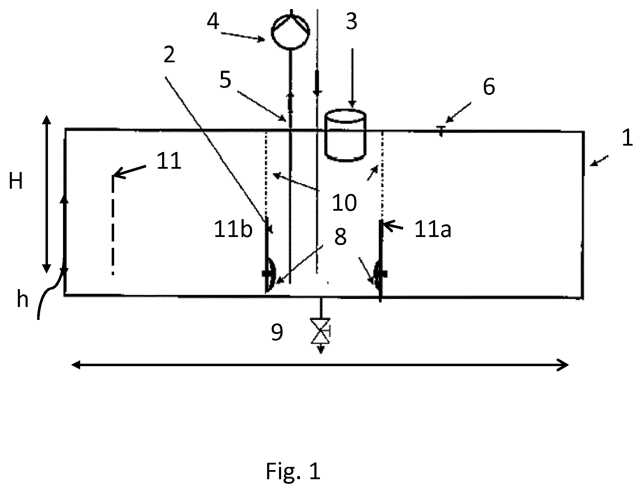

- Fig. 1: zeigt eine schematische Darstellung der beispielhaften Ausführungsform.

In Figur 1 ist schematisch ein Kraftfahrzeugtank 1 dargestellt. Ein solcher Tank, der in der Zeichnung als rechteckiger Querschnitt aufscheint, wird im allgemeinen als zylindrische Körper aufgebaut. Der Behälter besitzt eine Länge L sowie eine Höhe H. Die eigentliche Form des Behälters ist für die Erfindung nicht von Bedeutung. Ein solcher Kraftfahrzeugtank 1 weist Schwallwände 11 auf, wie sie beispielsweise links in der Zeichnung in einem Beispiel dargestellt sind und für die Reduktion von Schwappbewegungen im Tank dienen. Die erfindungsgemäße Lösung fordert zwei Schwallwände 11a und 11 b, die beanstandet von der geometrischen Mitte des Behälters eingebaut sind. Die beiden Schwallwände erstrecken sich von der Unterseite des Behälters bis zur Oberseite und sind an ihrer Unterseite dicht mit dem Boden des Behälters verbunden und auch mit der Behälterwand dicht verbunden. Die Schwallwände 11a,b sind bis zu einer Höhe h undurchlässig und ohne Öffnung gestaltet. Oberhalb der Höhe h erstrecken sich die Schwallwände mit mehreren Öffnungen bis zur Oberseite des Behälters, wobei die Öffnungen 10 als Siebe ausgebildet sind. Dicht an der Unterseite des Behälters sind Ventile 8 angeordnet. Diese Ventile sind als federbelastete Rückschlagventile aufgebaut, einen Variante benutzt Pilzventile. Die beiden Schwallwände sowie der Behälter des Tanks 1 bilden einen Schwalltopf 2, der bis zur Höhe h ein Volumen V1 bildet, das zunächst unabhängig vom Füllstand des restlichen Behälters befüllt werden kann. Die Schwallwände 11a,b weisen im unteren Bereich bis zu einer Höhe h von ca. 250 mm keine Öffnungen auf, die den Schwalltopf zu dem restlichen Tankbehälter hin öffnen. Über ein Einfüllrohr 3 wird das Volumen V1 des Schwalltopfes befüllt. Eine Kraftstoffpumpe 4 greift über eine Ansaugleitung 5 auf den Kraftstoff des Volumens im Schwalltopfes zu. Eine Rücklaufleitung 7 endet ebenfalls im Volumen V1 des Schwalltopfes. Die Ansaugleitung reicht möglichst an die tiefste Stelle des Schwalltopfes hinein um eine möglichst komplette Entleerung zu gewährleisten.

Der Motor des Fahrzeugs wird über die Kraftstoffpumpe 4 mit Kraftstoff versorgt. Dieser Kraftstoff wird aus dem Schwalltopf 2 entnommen der mittig im Tank direkt unterhalb des Einfüllstutzens 3 angebracht ist. Während des Tankvorgangs, insbesondere bei der Erstbetankung im Herstellerwerk wird durch den Einfüllstutzen 3 und die Anordnung des Schwalltopfes mittig unter dem Einfüllstutzen zuerst der Schwalltopf 2 befüllt. Bei der weiteren Befüllung läuft der Kraftstoff durch die Siebe 10 der Schwallwand 11a,b in den restlichen Tankraum ungehindert hinein. Dadurch bleibt grober Schmutz im Inneren des Schwalltopfs zurück. Feinerer Schmutz, der durch die Siebe in die äußeren Kammern des Tanks gelangt, wird durch die Bewegung des Kraftstoffes im Betrieb nach und nach in den Schwalltopf hineingeschwemmt, so dass die Verschmutzung in den äußeren Kammern des Tanks gering gehalten werden kann. Der im Schwalltopf zurückbleibende Schmutz kann bei Bedarf über die Entleerung durch Öffnen eines Ventils 9 aus dem Tank entfernt werden. Während des Betriebs des Nutzfahrzeuges wird Kraftstoff aus dem Schwalltopf abgesaugt und der Füllstand im Tank sinkt langsam ab. Wenn der Füllstand so weit gesunken ist, dass kein Überlaufen von Kraftstoff mehr vom restlichen Tankraum über die Siebe 10 in den Schwalltopf 2 hinein erfolgt, wird in weiterer Folge der Füllstand im Schwalltopf sinken. Ist der hydrostatische Druck im restlichen Tankraum, links und rechts vom Schwalltopf so groß, dass sich die Rückschlagventile im unteren Bereich der Schwallwände 11a,b öffnen, läuft Kraftstoff aus den restlichen Behälter in den Schwalltopf zu. Dabei öffnet sich bei einer Schräglage des Tanks auch nur das Rückschlagventil, das einen Druckunterschied zwischen Schwalltopf und Resttank sieht. Da die Ventile sich nur durch den festeingestellten Druckunterschied öffnen und nicht angesteuert werden müssen, ist das Verfahren stark gegenüber anderen aktiv gesteuerten Lösungen vereinfacht und dadurch robuster ausgelegt. Die Öffnungen der Ventile 8 sind nicht mit Sieben versehen, da so auch noch feine Verunreinigungen aus dem Tank in den Schwalltopf gespült werden können.

Dadurch ist ein Ausgleich der Füllstände zwischen den in diesem Beispiel beiden äußeren Kammern und dem Schwalltopf 2 möglich. Durch die erfindungsgemäße Anordnung kann für die Erstbetankung von Nutzfahrzeugen bis zu 80 % der bisher benötigten Füllmenge eingespart werden. Aktuell braucht ein Nutzfahrzeug bis zu 80 l Kraftstoff, um überhaupt aus der Werkshalle zu fahren. Durch den erfindungsgemäßen Schwalltopf und die Anordnung im Tank ist es möglich diese Menge auf 20 % reduzieren. Zusätzlich wird die nicht absaugbare Restmenge welche im Betrieb im Tank verbleibt um ca. 50 % verringert, das sich die Pilzventile auch in Schräglage öffnen und ein Ausgleich der Flüssigkeitsniveaus vom Tank in den Schwalltopf stattfindet. Das hat zur Folge, dass entweder bei gleicher Füllmenge die Reichweite pro Tank Volumen deutlich erhöht wird, es geht um eine Fahrzeitverlängerung von ca. 1,5 Stunden, oder das Tankvolumen im gleichen Ausmaß verringert werden kann, was zu einer Reduktion des Gesamtgewichtes führt. Die Restmenge kann durch die Anordnung der Siebe in den Öffnungen ohne Problem angesaugt werden, da die Verschmutzungen gesammelt und über die Entleerung , die ein Ventil enthält, entsorgt werden.

Zur weiteren Optimierung des Fahrzeugtanks werden in einer alternativen Lösung die Bauteile des Einfüllrohrs und der Ansaugleitung zu einem Bauteil integriert oder zumindest über eine gemeinsame Öffnung des Tanks installiert.

Eine weitere vorteilhafte Ausgestaltung ist durch die bauliche Integration des Einfüllstutzens 3 mit einer Schwallwand 11 gegeben. Auch die Integration der Ansaugleitung in eine Schwallwand ist denkbar.

Gerade bei der Herstellung des Tanks in Kunststoff durch Rotationssintern werden Schwallwände mit hergestellt. Dabei ist es auf einfache Art möglich, entlang der Schwallwände Leitungen vorzusehen, die als Ansaugleitung oder als Einfüllrohr dienen.

Für das Material des erfindungsgemäßen Fahrzeugtanks kommt Metall oder Kunststoff infrage. Auch Kombinationen der beiden Materialien sind denkbar. Die Herstellung des Tanks erfolgt dabei einstückig oder in mehreren Teilen.

### Bezugszeichenliste

- 1: Tank
- 2: Schwalltopf
- 3: Einfüllrohr
- 4: Kraftstoffpumpe
- 5: Ansaugleitung
- 6: ROV
- 7: Rücklaufleitung
- 8: Ventil
- 9: Entleerung
- 10: Siebe
- 11: Schwallwand
- 11a, 11b: Schwallwände

## Patentansprüche

1. Fahrzeugtank (1) bestehend aus einem Behälter mit einem durchgehenden Volumen und mindestens zwei Schwallwänden (11a, 11b) die sich senkrecht zur Längsachse (L) des Behälters erstrecken, wobei der Schwalltopf (2) über ein Einfüllrohr (3) befüllt wird, und die Schwallwände mit den Wänden des Behälters einen Schwalltopf bilden, indem sie direkt dicht mit dem Behälter verbunden sind, wobei die Schwallwände (11a, 11b) mindestens eine Öffnung (10) aufweisen, die oberhalb des gebildeten Schwalltopfes liegt und die Schwallwände innerhalb des Schwalltopfes Ventile (8) aufweisen, die den Zufluss von Kraftstoff in den Schwalltopf erlauben, **dadurch gekennzeichnet, dass** die Öffnungen (10) als Siebe ausgebildet sind und am Grund des Schwalltopfs (2) ein Ventil (9) zur Entleerung angebracht ist.

2. Fahrzeugtank nach Anspruch 1, **dadurch gekennzeichnet, dass** der im Behälter gebildete Schwalltopf (2) mittig im Behälter des Fahrzeugtanks gebildet ist.

3. Fahrzeugtank nach Anspruch 1, **dadurch gekennzeichnet, dass** die Ansaugleitung(5) in den Schwalltopf reicht und nahe am Einfüllrohr (3) angebracht ist.

4. Fahrzeugtank nach Anspruch 1, **dadurch gekennzeichnet, dass** die Ansaugleitung am Einfüllrohr angebracht ist.

5. Fahrzeugtank nach Anspruch 1, **dadurch gekennzeichnet, dass** das Einfüllrohr (3) direkt an einer Schwallwand angebracht ist.

6. Fahrzeugtank nach Anspruch 1, **dadurch gekennzeichnet, dass** die Ventile (8) Rückschlagventile sind.

7. Fahrzeugtank nach Anspruch 1, **dadurch gekennzeichnet, dass** die Rückschlagventile möglichst nahe am Behältergrund und Schwalltopfgrund angebracht sind.

## Claims

1. Vehicle tank (1) consisting of a container with a cohesive volume and at least two baffle plates (11a, 11b) which extend perpendicularly to the longitudinal axis (L) of the container, wherein the swirl pot (2) is filled via a filler pipe (3), and the baffle plates with the walls of the container form a swirl pot in that they are directly and tightly connected to the container, wherein the baffle plates (11a, 11b) have at least one orifice (10) which lies above the formed swirl pot, and the baffle plates within the swirl pot have valves (8) which allow the inflow of fuel into the swirl pot, **characterized in that** the orifices (10) are formed as sieves and a valve (9) for drainage is arranged on the base of the swirl pot (2).

2. Vehicle tank according to Claim 1, **characterized in that** the swirl pot (2) formed in the container is formed centrally in the container of the vehicle tank.

3. Vehicle tank according to Claim 1, **characterized in that** the suction line (5) extends into the swirl pot and is arranged close to the filler pipe (3).

4. Vehicle tank according to Claim 1, **characterized in that** the suction line is arranged on the filler pipe.

5. Vehicle tank according to Claim 1, **characterized in that** the filler pipe (3) is arranged directly on a baffle plate.

6. Vehicle tank according to Claim 1, **characterized in that** the valves (8) are check valves.

7. Vehicle tank according to Claim 1, **characterized in that** the check valves are arranged as close as possible to the container base and swirl pot base.

## Revendications

1. Réservoir de véhicule (1) constitué d'un contenant comprenant un volume continu et au moins deux parois anti-fluctuation (11a, 11b), lesquelles s'étendent perpendiculairement à l'axe longitudinal (L) du contenant, le pot anti-fluctuation (2) étant rempli au moyen d'un tube de remplissage (3), et les parois anti-fluctuation formant avec les parois du contenant un pot anti-fluctuation par le fait qu'elles sont connectées directement et hermétiquement au contenant, les parois anti-fluctuation (11a, 11b) présentant au moins une ouverture (10) qui est située au-dessus du pot anti-fluctuation formé et les parois anti-fluctuation présentant à l'intérieur du pot anti-fluctuation des clapets (8) qui permettent l'afflux de carburant dans le pot anti-fluctuation, **caractérisé en ce que** les ouvertures (10) sont réalisées sous forme de tamis et un clapet de vidange (9) est monté à la base du pot anti-fluctuation (2).

2. Réservoir de véhicule selon la revendication 1, **caractérisé en ce que** le pot anti-fluctuation (2) formé dans le contenant est formé centralement dans le contenant du réservoir de véhicule.

3. Réservoir de véhicule selon la revendication 1, **caractérisé en ce que** la conduite d'aspiration (5) s'étend dans le pot anti-fluctuation et est montée à proximité du tube de remplissage (3).

4. Réservoir de véhicule selon la revendication 1, **caractérisé en ce que** la conduite d'aspiration est montée sur le tube de remplissage.

5. Réservoir de véhicule selon la revendication 1, **caractérisé en ce que** le tube de remplissage (3) est monté directement sur une paroi anti-fluctuation.

6. Réservoir de véhicule selon la revendication 1, **caractérisé en ce que** les clapets (8) sont des clapets antiretour.

7. Réservoir de véhicule selon la revendication 1, **caractérisé en ce que** les clapets antiretour sont montés le plus près possible du fond du contenant et du fond du pot anti-fluctuation.
